# EUROPEAN PATENT SPECIFICATION

(11) **EP 3 855 785 B1**
(45) Date of publication and mention of the grant of the patent: **20.08.2025**
(21) Application number: 20153548.1
(22) Date of filing: 24.01.2020
(51) Int. Cl.: H04W 16/18, H04W 16/28, H01Q 9/10, H04B 7/06, H01Q 1/24, H01Q 15/14, H04B 7/04, H04B 7/145

(54) **METHOD FOR PLANNING COVERAGE IN A MOBILE TELECOMMUNICATIONS NETWORK HAVING AT LEAST ONE ANTENNA AND SYSTEM**
VERFAHREN ZUR PLANUNG DER ABDECKUNG IN EINEM MOBILTELEKOMMUNIKATIONSNETZWERK MIT MINDESTENS EINER ANTENNE UND SYSTEM
PROCÉDÉ DE PLANIFICATION DE COUVERTURE DANS UN RÉSEAU DE TÉLÉCOMMUNICATIONS MOBILE DISPOSANT D'AU MOINS UNE ANTENNE ET SYSTÈME

(43) Date of publication of application: 28.07.2021
(73) Proprietor: Deutsche Telekom AG, 53113 Bonn (DE)
(72) Inventor: FRISCH, Andreas, 53757 Sankt Augustin (DE); BREITBACH, Johannes Markus, 53227 Bonn (DE)
(74) Representative: Vossius & Partner Patentanwälte Rechtsanwälte mbB

(56) References cited:
- WO-A1-2019/045756
- US-A1- 2018 176 797
- US-B1- 10 419 948

## Description

The present invention relates to planning coverage in a mobile telecommunications network and a corresponding system. In particular, the invention relates to a method for planning coverage in a mobile telecommunications network having at least one antenna and system

Provision of coverage by current mobile networks is a quite complex matter. Beyond creating of coverage in a specific location by a direct line-of-sight relation to the antenna, additional effects have to be taken into account. In particular, reflections from specific natural and artificial objects will contribute to the overall coverage in a location. This already helps if coverage should be applied in locations like valleys, streets between buildings or areal drops which are outside the direct reach of the antenna beam, but due to an appropriate plain a reflected signal will cover the respective area.

Since reflection depends on the topography, existing buildings and any kind of objects with their specific surfaces regarding structures and capabilities the coverage created by reflection is very hard to plan or to be created. In fact, the coverage created by reflection most times is used as a welcomed side effect to avoid additional network invest for further (small) cell or repeater implementations. Nevertheless, in this form the contribution by reflection to the entire coverage is not really managed and optimised, in particular with respect to the reflection area.

The set-up and position of the antennas is optimised with regard to the area which should be provided with mobile network coverage. This may already take into account specific locations being in a dead angle with regard to the main beam and potential areas which may work as reflector into that location. Nevertheless, the reflection is taken as it is. If the result, in this respect coverage in a specific location via the reflected signal, is not sufficient further network measures are considered to achieve the requested level of coverage.

WO 2019/045756 A1 discloses a remote electric tiltable diffusing focusing passive reflector. US 2018/0176797 A1 relates to a terahertz communication method and system. US 10 419 948 B1 discloses aerial reflectors for terrestrial non-line-of-sight (NLOS) communication.

The present disclosure provides a method and system for planning coverage in a mobile telecommunications network. The method and system may also relate to improving coverage in a mobile telecommunications network. The invention is defined in the independent claims.

The dependent claims relate to preferred embodiments.

Various embodiments may preferably implement the following features.

The map preferably further displays at least one of antennas, antenna coverage, white spots, installed reflection surfaces and beam direction. The method may further comprise determining an angle of the reflection surface with respect to the antenna beam to direct the antenna beam. Alternatively, or even in addition, the method may further comprise determining a required curvature of the reflection surface to direct the antenna beam white spot having no or insufficient antenna coverage.

The existing reflection structure may be coated with a reflective film or a metal coated film. Alternatively, the method may comprise installing a reflection surface on the existing reflection structure. The reflection surface may be made of glass or a reflective film or a metal coated film or a reflective metal.

The reflection surface may be flat or concave, wherein the shape of the reflection surface is configured to optimise coverage of the white spot.

The antenna may be a beamforming antenna.

Various embodiments may preferably implement the following features.

The reflection surface is preferably installed in a specific angle with respect to the antenna beam. Alternatively, or in addition, the curvature of the reflection surface is adapted to direct the antenna beam towards the white spot having no or insufficient antenna coverage.

The reflection surface may be made of glass or a reflective film or a metal coated film or a reflective metal. The reflection surface may be flat or concave.

The antenna may be a beamforming antenna.

The invention is further described with reference to the following figures. Therein,
- Fig. 1: shows an exemplary set-up according to the present disclosure,
- Fig. 2: shows an example of the present disclosure,
- Fig. 3: shows a reflection structure having high absorbance and/or scattering,
- Fig. 4: shows two reflection structures having two alternative reflection surfaces mounted thereon.

Details on mobile telecommunication networks as well as antennas and their working principle will be omitted.

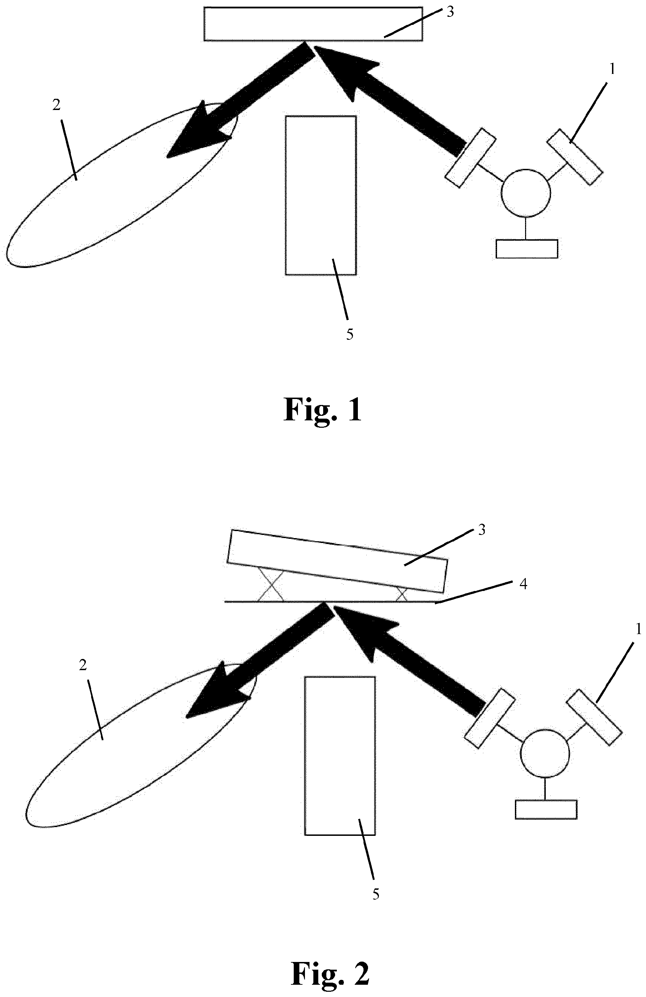

The principle of the invention will be described in the following and with reference to Fig. 1. As evident from Fig. 1, there is no direct line of sight connection between the antenna 1 and the area to be covered due to an obstacle 5, leading to a white spot 2. Given, there is an appropriate reflection structure 3 or plain which could act as reflector, this structure 3 or plain can or in very detailed planning even has to be introduced into the entire planning and optimisation of the coverage (example 1). The plain may be called reflection structure 3 and encompasses a variety of natural and artificial structures which either themselves are reflective or may be made reflective by modification.

There are already two known locations: The antenna 1 itself with all its capabilities (power, used spectrum range, tilt, altitude, ...) and the area which should get coverage but is out of the direct beam of the antenna, i.e. a white spot 2. With these two locations already known, the location and angle of a reflection for a suitable coverage provision can be determined. If there already is coverage in the requested area, the most likely reflection structure 3 can be determined. This may become more complex if the coverage is not provided by one single reflection but as a result of multiple reflections from different reflection structures 3.

Areas with insufficient or no coverage may be called white spots 2. If there is no coverage at all in a location, potential reflection structures 3 could be analysed with regard to the existing antenna beams of the network around and good locations of such reflection structures 3 to get coverage in the location. Since - due to the starting assumption - coverage is not available in that location, either no appropriate reflection structures 3 (right place, right size, right angle) are available or an appropriate structure 3 or plain is given but the surface is more absorbing than reflecting which prevents any further coverage provision via reflection.

With knowledge of the not / not sufficiently covered location, i.e. the white spot 2, and the most appropriate antennas 1 of the mobile network areas for a reflection structure can be analysed. Given there already is a nearly appropriate structure 3 this could actively be optimised regarding the right placement and surface by employing a reflection surface (example 2).

Fig. 2 shows an example of the present disclosure. The setup is very similar to the one shown in Fig. 1. However, the reflection structure 3 was not suitable for reflecting the antenna beam to the white spot 2, since the angle was not suitable and would have led to a reflection in an unwanted direction. It may also be the case that the surface of the reflection structure 3 is absorbing too much of the antenna beam's energy, such that an insufficient signal is reflected, thereby leading to a white spot 2. In Fig. 2, a reflection surface 4 is mounted onto the reflection structure 3 in order to direct the antenna beam to the white spot 2. This is indicated by the arrows.

Given there is at least a good foundation and the opportunity to design/adopt the location according to the telecom network operator needs, adjustments can be done in two direction: The reflection structure 3 can e.g. be optimised regarding the angle by building up a reflection surface 4 on top of the given location which has a better angle for the relation between antenna 1 and location to be covered 2 or regarding the structure 3 by creating a surface 4 which is optimised for reflecting the signal (which may be called "mirroring") with minimum absorbance and spreading of the signal. Therefor the existing reflection structure 3 may be coated with a reflective film or a metal coated film or a reflection surface 4 may be installed on the existing reflection structure 3, the surface being made of glass or a reflective film or a metal coated film or a reflective metal.

The prerequisites of the following non exhausting list should therefor preferably be fulfilled. Space for an appropriate surface 4 or plain has to be given, constructional changes can be in line with legal aspects, constructional changes can be done in line with stability, accessibility, etc. of the entire structure, and/or economic feasibility is given.

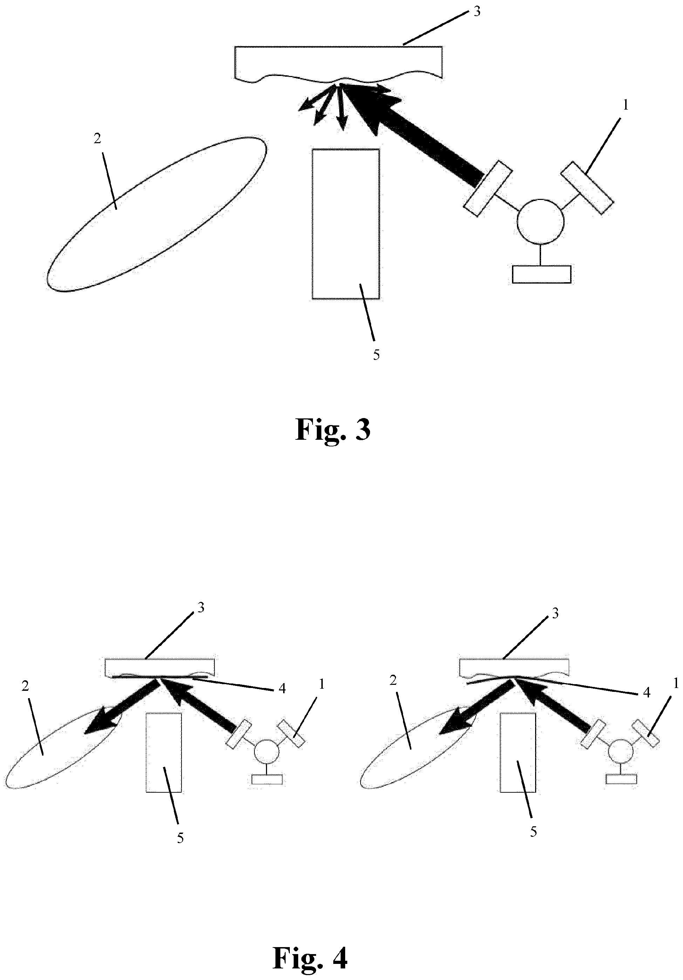

Fig. 3 shows a reflection structure 3, which in principle is suitable for reflecting an antenna beam but is highly lossy due to an absorbing surface and/or an irregular surface leading to scattering. This is indicated by the reflection arrows in Fig. 3.

Fig. 4 on the other hand shows the reflection structure 3 according to Fig. 3 with two alternative reflection surfaces 4 mounted on top. The image on the left shows a plane reflection surface 4, wherein the image on the right depicts a curved reflection surface 4. This in some cases may be useful in order to direct the antenna beam towards the white spot 2. Also, beamforming of the antenna 1 may be employed. This is further discussed below.

Beyond the construction itself to optimise the angle for the reflection, the surface and material of the reflection surface 4 is an important factor. Is has to be really even or plain to minimise cross spreading. Furthermore, materials have to be used which are most appropriate to reflect electromagnetic waves as used in mobile network technologies in the most appropriate spectrum ranges. See also left drawing in Fig. 4 in this regard.

There is already an analogy to the use of parabolic antennas. For these antennas the surface in the dish is used to optimise the reflection into the receiver in the center of the dish. Most common are dishes consisting of varnished steel or aluminium with metal-powder coating. Since this works out for TV-transmission in the spectrum range of 1-2 GHz which is very close the spectrum used for most mobile networks the technology for the surface seems to be suited for the purpose of the reflection structure as described herein.

Even if a perfect reflection structure 3 regarding the location is available a massive construction in the form of a reflection surface 4 may not be appropriate since such a construct may cover windows, shadow the area below the construct etc. With regard to pure light effects usual glass in appropriate stability can be used. In a situation, the surface itself is already available but heavy construction cannot be implemented, a solution with specific film can be used. Such film is available in a nearly transparent form (e.g. used in advertisement to cover large objects like busses). This film can be provided with a metal-powder coating, similar to the principle of satellite dishes, to even improve the reflection capabilities. By this the reflection is optimised while less impact to the environment is done (example 3).

In addition to or instead of the previous examples, the reflection itself may be shaped (example 4). Thereby, further results can be achieved, in particular in a very detailed planning. If a very specific reflection shall be created this can be produced by the following methods, either in a separated or even in a combined way to strengthen the effect.

One possible solution may be beamforming. To get an optimal reflection in the requested spot via a known reflection structure the optimal path from the antenna to the reflection structure is analysed and an according beam of the antenna is produced via beamforming focusing the energy exactly that way the via the reflection structure maximum effect is achieved for the spot.

Alternatively or in addition, a curved reflection surface may be employed. With this method the reflection surface itself is curved in such way, that incoming signals from a known antenna are bundled and directed to the respective coverage spot (this is similar to the principle of a parabolic antenna).

As described above, reflection is and can be used in even an optimised manner to provide coverage in a specific location. Of course, additional cells or repeaters can fulfil this purpose as well, from a pure technology perspective maybe even in a more powerful and controlled way. However, beyond pure technology economics have to be considered as well. Instead of implementing a new base station or antenna location a repeater could be a solution to reduce effort. But even with a repeater power supply becomes a topic, in some locations even a challenge and issue. The proposed solution works without any power supply which may be a key argument in some specific situations.

An exemplary optimal set-up and scenario for proposed solution may look like follows: A road leads along artificial (e.g. noise absorbance walls) or natural walls (valley). There is a "white spot" on some part of the way, maybe even in a short tunnel. A repeater could solve as solution, but power supply is not available and has to be deployed with according cost. By introducing a planned and with respect to location and purpose optimised reflection surface the missing coverage is produced without any new capacity planning, coordination or supporting services like power etc.

In addition, an example 5 may relate to identifying appropriate buildings or objects suitable to improve network coverage. In other words, it might become useful to get detailed data on potential reflection structures. Since the reflection structure should have a flat surface to become a candidate even without specific constructions, most likely not natural but human made buildings and similar places are in closer loop to actively integrate those in planning.

Therefor precise and detailed maps which display those objects may be generated. These data could be used to actively identify appropriate buildings and similar places as first step to introduce those in the network planning and to improve those with the proposed system and method.

According to the present disclosure, a method for planning or improving coverage in a mobile telecommunications network having at least one antenna has been proposed. In particular, according to the disclosure a white spot having no or insufficient coverage may be identified. Furthermore, an existing reflection structure which is covered by the at least one antenna and as has been described in various examples above may be identified. In order to direct an antenna beam from the antenna to the white spot, a reflection surface is identified. Different examples of employment of such a reflection surface have also been discussed above.

The present disclosure also encompasses multiple reflection surfaces on the same or on different existing structures interacting such that white spots which are difficult to reach may be covered.

## Claims

1. Method for planning coverage in a mobile telecommunications network having at least one antenna (1), the method comprising:
identifying a white spot (2) having no or insufficient antenna coverage;
identifying a plurality of existing reflection structures (3) being covered by the at least one antenna (1), wherein the plurality of existing reflection structures (3) is natural or artificial;
identifying at least one appropriate reflection structure (3) from the plurality of existing reflection structures (3),
identifying at least one reflection surface (4) for the at least one appropriate existing reflection structure (3), the at least one reflection surface (4) being adapted to direct an antenna beam from the at least one antenna (1) to the white spot (2),
wherein the method further comprises generating a map displaying existing reflection structures and appropriate reflection structures.

2. Method according to claim 1,
wherein the map further displays at least one of antennas, antenna coverage, white spots, installed reflection surfaces and beam direction.

3. Method according to claim 1 or 2, wherein the method further comprises:
determining an angle of the at least one reflection surface (4) with respect to the antenna beam to direct the antenna beam and/or
determining a required curvature of the at least one reflection surface (4) to direct the antenna beam.

4. Method according to any one of the preceding claims, wherein the method further comprises:
coating the at least one appropriate reflection structure (3) with a reflective film or a metal coated film or
installing the at least one reflection surface (4) on the at least one appropriate reflection structure (3), the at least one reflection surface (4) being made of glass or a reflective film or a metal coated film or a reflective metal.

5. Method according to any one of the preceding claims, wherein the at least one reflection surface (4) is flat or concave, wherein the shape of the at least one reflection surface (4) is configured to optimise coverage of the white spot (2).

6. Method according to any one of the preceding claims, wherein the antenna (1) is a beamforming antenna.

7. System for directing an antenna beam of a mobile communications network having at least one antenna (1), the system comprising:
a plurality of existing reflection structures (3) being covered by the at least one antenna (1), wherein the plurality of existing reflection structures (3) is natural or artificial;
at least one reflection surface (4) installed on at least one of the plurality of existing reflection structures (3) and adapted to direct the antenna beam to a white spot (2) having no or insufficient antenna coverage,
wherein the system is configured to identify the white spot (2) having no or insufficient antenna coverage,
identify at least one appropriate reflection structure (3) from the plurality of existing reflection structures (3),
identify the at least one reflection surface (4) for the at least one appropriate existing reflection structure (3), and
generate a map displaying existing reflection structures and appropriate reflection structures.

8. System according to claim 7, wherein the at least one reflection surface (4) is installed in a specific angle with respect to the antenna beam and/or curvature adapted to direct the antenna beam.

9. System according to claim 7 or 8, wherein the at least one reflection surface (4) is made of glass or a reflective film or a metal coated film or a reflective metal.

10. System according to any one of claims 7 to 9, wherein the at least one reflection surface (4) is flat or concave, wherein the shape of the at least one reflection surface (4) is configured to optimise coverage of the white spot (2).

11. System according to any one of claims 7 to 10, wherein the antenna (1) is a beamforming antenna.

## Patentansprüche

1. Verfahren zur Planung der Abdeckung in einem Mobiltelekommunikationsnetzwerk mit mindestens einer Antenne (1), wobei das Verfahren aufweist:
Identifizieren eines weißen Flecks (2) mit keiner oder unzureichender Antennenabdeckung;
Identifizieren von mehreren vorhandenen Reflexionsstrukturen (3), die von der mindestens einen Antenne (1) abgedeckt werden, wobei die mehreren vorhandenen Reflexionsstrukturen (3) natürlich oder künstlich sind;
Identifizieren mindestens einer geeigneten Reflexionsstruktur (3) aus den mehreren vorhandenen Reflexionsstrukturen (3),
Identifizieren mindestens einer Reflexionsfläche (4) für die mindestens eine geeignete vorhandene Reflexionsstruktur (3), wobei die mindestens eine Reflexionsfläche (4) geeignet ist, einen Antennenstrahl von der mindestens einen Antenne (1) auf den weißen Fleck (2) zu richten,
wobei das Verfahren ferner das Erzeugen einer Karte aufweist, die vorhandene Reflexionsstrukturen und geeignete Reflexionsstrukturen anzeigt.

2. Verfahren nach Anspruch 1, wobei die Karte ferner mindestens eines anzeigt von: Antennen, Antennenabdeckung, weiße Flecken, installierte Reflexionsflächen und Strahlrichtung.

3. Verfahren nach Anspruch 1 oder 2, wobei das Verfahren ferner aufweist:
Bestimmen eines Winkels der mindestens einen Reflexionsfläche (4) in Bezug auf den Antennenstrahl, um den Antennenstrahl zu richten, und/oder
Bestimmen einer erforderlichen Krümmung der mindestens einen Reflexionsfläche (4), um den Antennenstrahl zu richten.

4. Verfahren nach einem der vorhergehenden Ansprüche, wobei das Verfahren ferner aufweist:
Beschichten der mindestens einen geeigneten Reflexionsstruktur (3) mit einem reflektierenden Film oder einem metallbeschichteten Film oder
Anbringen der mindestens einen Reflexionsfläche (4) auf der mindestens einen geeigneten Reflexionsstruktur (3), wobei die mindestens eine Reflexionsfläche (4) aus Glas oder einem reflektierenden Film oder einem metallbeschichteten Film oder einem reflektierenden Metall besteht.

5. Verfahren nach einem der vorhergehenden Ansprüche, wobei die mindestens eine Reflexionsfläche (4) flach oder konkav ist, wobei die Form der mindestens einen Reflexionsfläche (4) konfiguriert ist, die Abdeckung des weißen Flecks (2) zu optimieren.

6. Verfahren nach einem der vorhergehenden Ansprüche, wobei die Antenne (1) eine Strahlformungsantenne ist.

7. System zum Richten eines Antennenstrahls eines Mobilfunknetzes mit mindestens einer Antenne (1), wobei das System aufweist:
mehrere vorhandene Reflexionsstrukturen (3), die von der mindestens einen Antenne (1) abgedeckt werden, wobei die mehreren vorhandenen Reflexionsstrukturen (3) natürlich oder künstlich sind;
mindestens eine Reflexionsfläche (4), die auf mindestens einer der mehreren vorhandenen Reflexionsstrukturen (3) installiert ist und geeignet ist, den Antennenstrahl auf einen weißen Fleck (2) zu richten, der keine oder eine unzureichende Antennenabdeckung aufweist,
wobei das System konfiguriert ist, den weißen Fleck (2) zu identifizieren, der keine oder eine unzureichende Antennenabdeckung aufweist,
mindestens eine geeignete Reflexionsstruktur (3) aus den mehreren vorhandenen Reflexionsstrukturen (3) zu identifizieren,
die mindestens eine Reflexionsfläche (4) für die mindestens eine geeignete vorhandene Reflexionsstruktur (3) zu identifizieren, und
eine Karte zu erzeugen, die vorhandene Reflexionsstrukturen und geeignete Reflexionsstrukturen anzeigt.

8. System nach Anspruch 7, wobei die mindestens eine Reflexionsfläche (4) in einem spezifischen Winkel in Bezug auf den Antennenstrahl und/oder einer Krümmung installiert ist, der/die geeignet ist, den Antennenstrahl zu richten.

9. System nach Anspruch 7 oder 8, wobei die mindestens eine Reflexionsfläche (4) aus Glas oder einem reflektierenden Film oder einem metallbeschichteten Film oder einem reflektierenden Metall besteht.

10. System nach einem der Ansprüche 7 bis 9, wobei die mindestens eine Reflexionsfläche (4) flach oder konkav ist, wobei die Form der mindestens einen Reflexionsfläche (4) konfiguriert ist, die Abdeckung des weißen Flecks (2) zu optimieren.

11. System nach einem der Ansprüche 7 bis 10, wobei die Antenne (1) eine Strahlformungsantenne ist.

## Revendications

1. Procédé de planification de la couverture dans un réseau de télécommunications mobiles comportant au moins une antenne (1), le procédé comprenant :
l'identification d'une zone blanche (2) où la couverture par antenne est nulle ou insuffisante ;
l'identification d'une pluralité de structures de réflexion (3) existantes couvertes par l'au moins une antenne (1), la pluralité de structures de réflexion (3) existantes étant naturelles ou artificielles ;
l'identification d'au moins une structure de réflexion (3) appropriée parmi la pluralité de structures de réflexion (3) existantes,
l'identification d'au moins une surface de réflexion (4) pour l'au moins une structure de réflexion (3) existante appropriée, l'au moins une surface de réflexion (4) étant adaptée pour diriger un faisceau d'antenne de l'au moins une antenne (1) vers la zone blanche (2),
le procédé comprenant en outre la génération d'une carte affichant les structures de réflexion existantes et les structures de réflexion appropriées.

2. Procédé selon la revendication 1, dans lequel la carte affiche en outre au moins l'un des éléments suivants entre des antennes, la couverture par antenne, les zones blanches, les surfaces de réflexion installées et la direction du faisceau.

3. Procédé selon la revendication 1 ou 2, le procédé consistant en outre à :
déterminer un angle de l'au moins une surface de réflexion (4) par rapport au faisceau d'antenne pour diriger le faisceau d'antenne et/ou
déterminer une courbure nécessaire de l'au moins une surface de réflexion (4) pour diriger le faisceau d'antenne.

4. Procédé selon l'une quelconque des revendications précédentes, le procédé comprenant en outre :
le revêtement de l'au moins une structure de réflexion (3) appropriée avec un film réfléchissant ou un film à revêtement métallique, ou
l'installation de l'au moins une surface de réflexion (4) sur l'au moins une structure de réflexion (3) appropriée, l'au moins une surface de réflexion (4) étant faite de verre ou d'un film réfléchissant ou d'un film à revêtement métallique ou d'un métal réfléchissant.

5. Procédé selon l'une quelconque des revendications précédentes, dans lequel l'au moins une surface de réflexion (4) est plane ou concave, la forme de l'au moins une surface de réflexion (4) étant configurée pour optimiser la couverture de la zone blanche (2).

6. Procédé selon l'une quelconque des revendications précédentes, dans lequel l'antenne (1) est une antenne à formation de faisceau.

7. Système pour diriger un faisceau d'antenne d'un réseau de communications mobiles ayant au moins une antenne (1), le système comprenant :
une pluralité de structures de réflexion (3) existantes couvertes par l'au moins une antenne (1), la pluralité de structures de réflexion (3) existantes étant naturelles ou artificielles ;
au moins une surface de réflexion (4) installée sur au moins une des structures de la pluralité de structures de réflexion (3) existantes et adaptée pour diriger le faisceau d'antenne vers une zone blanche (2) dont la couverture par antenne est nulle ou insuffisante,
le système étant configuré pour identifier la zone blanche (2) dont la couverture par antenne est nulle ou insuffisante,
l'identification d'au moins une structure de réflexion (3) appropriée parmi la pluralité de structures de réflexion (3) existantes,
l'identification de l'au moins une surface de réflexion (4) pour l'au moins une structure de réflexion (3) existante appropriée, et
la génération d'une carte affichant les structures de réflexion existantes et les structures de réflexion appropriées.

8. Système selon la revendication 7, dans lequel l'au moins une surface de réflexion (4) est installée selon un angle spécifique par rapport au faisceau d'antenne et/ou une courbure adaptée pour diriger le faisceau d'antenne.

9. Système selon la revendication 7 ou 8, dans lequel l'au moins une surface de réflexion (4) est constituée de verre ou d'un film réfléchissant ou d'un film à revêtement métallique ou d'un métal réfléchissant.

10. Système selon l'une quelconque des revendications 7 à 9, dans lequel l'au moins une surface de réflexion (4) est plane ou concave, la forme de l'au moins une surface de réflexion (4) étant configurée pour optimiser la couverture de la zone blanche (2).

11. Système selon l'une quelconque des revendications 7 à 10, dans lequel l'antenne (1) est une antenne à formation de faisceau.
